(19) Europäisches Patentamt
European Patent Office
Office européen des brevets

(11) **EP 1 749 798 A1**

(12) **EUROPEAN PATENT APPLICATION**

(43) Date of publication:
**07.02.2007 Bulletin 2007/06**

(51) Int Cl.:
*C02F 1/28* (2006.01)          *C02F 1/52* (2006.01)
*C02F 3/12* (2006.01)

(21) Application number: **06380196.3**

(22) Date of filing: **12.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **28.07.2005 ES 200501850**

(71) Applicant: **Sociedad Anonima Minera Catalano-Aragonesa**
**5001 Zaragoza (ES)**

(72) Inventors:
• **Tolosa Cortes, José Ignacio**
  **50001 Zaragoza (ES)**
• **Aguaviva Ladrero, Nuria Isabel**
  **50001 Zaragoza (ES)**
• **Caballero López, Miguel Angel**
  **50001 Zaragoza (ES)**
• **Jimenez Lorenzo, Maximino**
  **Isla de la Cartuja,**
  **41092 Sevilla (ES)**

(74) Representative: **Ungria Lopez, Javier et al**
  **Avda. Ramon y Cajal, 78**
  **28043 Madrid (ES)**

(54) **Mineral product for the technological improvement of aerobic biological treatments and corresponding use thereof**

(57) Mineral product for the technological improvement of waste-water purification by means of aerobic biological treatments and use. Said mineral product is characterised by containing clays and mineral carbonates.

EP 1 749 798 A1

**Description**

**TECHNICAL FIELD OF THE INVENTION**

This invention comes within the field of the treatment and purification of waste-waters by means of aerobic biological treatments. More specifically, it refers to a mineral product containing clays and mineral carbonates, especially useful for the technological improvement of said processes.

**STATE OF THE ART PRIOR TO THE INVENTION**

The purification of waste-waters constitutes one of the fields that has undergone the greatest development in recent years. The imposition of ever more restrictive legislation from the different Administrations, together with a greater awareness on the part of the society, has led to an increase in efforts to search for suitable treatment and purification systems.

The use of biological treatments has been imposing itself in recent years as the way to improve the quality of the waste-waters. All systems are based on the natural action of bacteria, nevertheless there exists a large number of variations that are well known and described in the art. The version that is most well known and used is undoubtedly the one corresponding to what is known as the active sludge system. Among the other possibilities, standing out in particular is the use of SBR (Sequencing Batch Reactor) technology, characterised in that all the processes take place in a single tank.

The use of fixed or moving fills as the way of improving the efficiency and design of aerobic biological systems is well known. Together with plastic fills, the use of fixed or moving beds of mineral products can be emphasised. Standing out very particularly among them is the use of activated carbon in powder form and zeolites (natural and modified). The advantages associated with the use of both products can be summarised in a better stability of the system as a consequence of a better settling of the biological sludge, an improvement in the nitrification capacity of the system and the elimination of non-biodegradable contamination.

Clays have been proposed for use in water purification treatments. This is on account of certain properties displayed by those materials, such as their high porosity, their high specific surface and their high capacity for cation exchange, which grants them their characteristic high capacity for absorption and adsorption.

Clays have been studied both in natural and in modified form. With these modifications, the aim has been to vary some of the characteristics of the clay. So, the treatment of clays with inorganic acids provokes a cleaning of the material and an increase in the porosity and specific surface. An increase in porosity has also been achieved by means of heat treatment of clays. The objective that is sought has been to prepare specific products for concrete problems. By way of example, treatment of clays with certain organic reagents confers hydrophobic properties on them which can be exploited for the selective elimination of organic contaminants.

More specifically, clays have been proposed for use in biological purification treatments, whether aerobic or anaerobic, acting as a porous support permitting the growth and fixing of the bacteria that act in purification processes. In comparison with other materials mentioned earlier which serve as support (activated carbon, ceramic materials, plastics), it has been proposed that traces of elements such as copper, zinc, iron, magnesium and others, electrostatically fixed in the clays, serve as nutrients for the bacteria.

Some examples illustrate the use of clays in waste-water treatment and purification processes by means of biological treatments:

- Patent US 3,935,067: describes the use of sodium bentonite as support for a bacterial culture which uses a growth promoter for the bacteria.

- Patent FR 2,551,048 A1: describes the use of attapulgite and sepiolite in the purification of effluents from alcohol fermentation vats containing phototrophic type bacteria.

- Patent ES 2,005,754: describes the treatment of waste-water in the presence of a fill of a clayey mineral in expanded or fluidised bed anaerobic digestors.
  Said fill can be selected from among sepiolite, smectite, vermiculite, kaolinite, chlorite, halloysite, illite or paligorskite.

- Patent WO 94/20425: describes the use of talc, kaolin or mica in a purification process by means of the active sludge system.

- Patent ES 5,643,453: describes the use of kaolin as support for bacteria in aerobic biological treatments.

- Patent EP 0834473 A1: describes a biological activator for septic pits consisting of clays together with cations such that the fixing and activation of the natural enzymes of the process is increased.

- Patent US 6,503,740: describes the use of organically modified clays as support for bacteria in the decomposition of chemical contaminants. The clays proposed are smectites, sepiolite, attapulgite, kaolinite, among others.

The object of the present invention concerns a mineral product for the treatment of waste-water by means of aerobic biological treatments, said product containing clayey minerals and mineral carbonates. Some representative examples of systems containing mineral carbonates in their composition in the treatment and/or purification of waste-water by means of aerobic biological treatments are cited below:

- Patent DE 3,440,619: proposes the use of calcium carbonate, magnesium carbonate, limestone or dolomite as solid support for bacteria.

- Patent DE 3,501,563: describes the use of limestone or dolomite for controlling the pH at a suitable value for the biological treatment of waste-water in a combined process of mechanical, chemical and biological purification. The addition of limestone or dolomite is carried out in the physical-chemical process.

- Patent ES 2,087,833: describes a chemical biological activator whose composition includes calcium carbonate and magnesium carbonate, which contribute a sufficient quantity of calcium and magnesium necessary for the satisfactory development of the microorganisms.

- Patent JP 2004167471: describes a material for treatment of water where the bacteria can be fixed. This material consists of powdered sulphur and an alkaline earth carbonate.

The applicant has now discovered a mineral product which contains clays and mineral carbonates, which constitutes the object of the present invention and, as far as he has been able to find out, has not so far been used for the purpose proposed here.

## DETAILED DESCRIPTION OF THE INVENTION

The present invention concerns a mineral product containing:

- 45 to 95 % by weight of clay, and;

- between 4 and 55 % by weight of mineral carbonates,
  and said mineral product has been modified by means of a treatment selected from between:

- a heat treatment at a temperature between 20 and 1200° C, during a period of time between 10 seconds and 24 hours; and/or:

- a treatment with a chemical product selected from among an inorganic acid, an organic acid, one or more salts of inorganic acids and one or salts of organic acids.

In greater detail, the present invention refers to a mineral product that contains clays and mineral carbonates, said clays being selected from among sepiolite, paligorskite, smectites, illite and mixtures thereof, as mineral products useful in the treatment and purification of waste-waters by means of treatment of waste-water by means of aerobic biological purification treatments.

Both the clays and the mineral carbonates present in the mineral product which is the object of the invention are an active part in the usefulness of the mineral product for the treatment and purification of contaminated waste-water by means of aerobic biological treatments.

The clays are in turn selected from among sepiolite, paligorskite, smectites, illite and mixtures thereof, in the following percentages:

|  | % (w/w) |
| --- | --- |
| - sepiolite and/or paligorskite: | 5-80 |

(continued)

|  | % (w/w) |
| --- | --- |
| - smectites: | 5-40 |
| - illite: | 0-30 |

with respect to the total weight of the composition.

The smectites are selected from among the group consisting of: montmorillonite, beidellite, hectorite, nontronite, saponite, sauconite, stevensite, and mixtures thereof.

The mineral carbonates forming part of the mineral product of the inventive object are selected from among calcite ($CaCO_3$), magnesite ($MgCO_3$), dolomite ($CaMg(CO_3)_2$), siderite ($FeCO_3$), and mixtures thereof.

Moreover, the mineral product forming the inventive object can optionally contain up to 20% (w/w) of other minerals selected from the group formed from: feldspars, plagioclases, micas, quartz, kaolinite, talc, chlorite, vermiculite, hallyosite and mixtures thereof.

Mineral carbonates are materials well known to man. On account of their historical importance and industrial applications, standing out among them all are calcium carbonate ($CaCO_3$; calcite or limestone), magnesium carbonate ($MgCO_3$; magnesite) and calcium magnesium double carbonate (with ideal formula $CaMg(CO_3)_2$; dolomite).

Mineralogically, the term clays applies to a specific group of phyllosilicates. The structure of these phyllosilicates is based on the stacking of planes of oxygen and hydroxyl ions. The tetrahedral groups of $SiO_4^{4-}$ are joined together with three of their four oxygens being shared with other neighbours forming layers of infinite extent and formula $Si_2O_5^{2-}$, which constitute the fundamental unit of phyllosilicates. The tetrahedral silicon can be partly substituted for $Al^{3+}$ or $Fe^{3+}$. These tetrahedral layers are joined to other octahedral ones of the gibbsite or brucite type. The plane of union between the two layers consists of apical oxygens not shared by the $SiO_4^{4-}$ tetrahedrons and by OH- groups of the octahedral layer.

A similar union can occur on the opposite surface of the octahedral layer. So, phyllosilicates can be formed either of two layers, tetrahedral plus octahedral, in which case they are known as 1:1 phyllosilicates, or of three layers, an octahedron and two tetrahedrons, in which case they are known as 2:1 phyllosilicates. The unit formed by the union of these two or three layers is known as a sheet. If all the octahedral holes are occupied, the sheet is said to be trioctahedral. If just two thirds of those positions are occupied and the rest are vacant, it is said to be dioctahedral.

The group of serpentines-candites are 1:1 phyllosilicates. As 2:1 phyllosilicates are the groups talco-pyrophyllite, smectites, vermiculites, illites, micas and chlorite.

Also included in the term clays are minerals belonging to the group of hormites, formed by minerals of the paligorskite-sepiolite family. Unlike the rest of phyllosilicates, which are laminar, they have a fibrous habit, since the basal layer of oxygen is continuous, but the apical oxygens undergo a periodical inversion every six tetrahedrons (sepiolite) or every four tetrahedrons (paligorskite/attapulgite). This inversion provokes the formation of canals in which large size molecules can be accommodated.

The mineral product forming the inventive object displays a mineralogical composition containing between 45 and 95 % of clays and between 4 and 55 % of mineral carbonates. Said clays are a mixture of sepiolite and/or paligorskite (between 5 and 75 %), smectites (between 5 and 40 %) and illite (between 0 and 30 %). The mineral product can display up to 20 % of other minerals, said minerals being able to be feldspars, plagioclases, micas, quartz, kaolinite, talc, chlorite, vermiculite, hallyosite and mixtures thereof. The percentages are always those referred to the total for the composition.

In order to obtain the mineral product, a deposit can be selectively worked, extracting a clayey rock containing the ingredients forming part of the mineral product in the stated percentages. Said clayey rock is extracted from the deposit with a moisture content of more than 30 %. It is then subjected to a process of stockpiling, grinding, drying and granulating, with any of the systems habitually used in industry being able to be used in these processes.

It is also an object of the invention to obtain the mineral product described via the mixture of various components, each of them containing one or several of the ingredients forming part of the mineral product. Said mixture can be made by any of the methods known in industry, and can then be subjected to processes of grinding, drying and granulating.

The mineral product forming the object of the invention is preferably presented as a porous granular product with a grain size of less than 5 mm, preferably less than 0.6 mm, preferably less than 150 $\mu$m and preferably less than 10 $\mu$m.

Various process of modification of clays have been commented on earlier, such as heat treatment, acid activation or the addition of organic reagents. Given that these processes are known and habitually used in industry, also considered to be an inventive object is a mineral product for the treatment and purification of contaminated waste-water by means of aerobic biological treatments, said mineral product resulting from the modification of the mineral product forming the object of the present invention by any of said treatments.

In accordance with the above, the present invention also covers a mineral product like that defined earlier, modified by a process of heat treatment. Said heat treatment process is carried out at a temperature between 20 and 1200° C, during a period of time between 10 seconds and 24 hours. Following the heat treatment, the mineral product can be subjected to a granulation process until the desired grain size, stated above, is achieved.

Likewise, the present invention also covers a mineral product containing clays and mineral carbonates as defined above, modified by a process of treatment with organic and/or inorganic products. In particular, said modification is carried out by means of treatment of the mineral product with organic and/or inorganic acids and their salts.

Also an object of invention is the method of use of the mineral products described in the treatment and purification of waste-water by means of aerobic biological treatments.

Likewise considered to be an object of invention is the use of the mineral products described in processes of aerobic biological purification in combination with corrector agents for pH, flocculants, coagulants, decolorants and mixtures thereof. The mineral product can be present in any of the possible phases which the aerobic biological process consists of in which the bacteria responsible for the purifying activity of the process are found to be present. The mineral product can be used both in fixed bed systems and in fluid bed systems.

For its use in fluid bed systems, the mineral product can be added either in its solid form or in the form of suspension. Said suspension can be obtained by mixing the mineral product forming the object of the Main patent with water or with the discharge to be treated. The quantity of mineral product to use lies between 0.001 % and 50 %, preferably between 0.001 % and 20 %, preferably between 0.001 % and 10 %, and more preferably between 0.001 % and 1 %, at all times in dry matter with respect to one litre of waste-water to treat. The addition of the mineral product forming the inventive object can be carried out in any of the phases provided it is brought into contact with the sludge of the biological process. Especially preferred are addition during the process of aeration of the liquor mixture or addition on the active sludge recirculating from the settling tank to the aeration tank, in a process of the active sludge type or similar.

The addition of the mineral product forming the inventive object produces an increase in the number of microorganisms responsible for purification of the discharge present in the biological reactor. This increase in the quantity of biological sludge has also been found to be accompanied by a reduction in the volume occupied by that sludge and with an improvement in its rate of settling. These observations describe the mineral product forming the inventive object as being an efficient biological activator in aerobic purification processes, increasing the purification capacity of existing biological reactors. Its use likewise permits the design of aerobic biological reactors of small volume, yet which maintain their purification capacity and without giving rise to a greater volume of excess sludge which would have to be treated later on.

Similarly, by means of using the mineral product for the purification of waters forming the object of the invention, a reduction is obtained in the value of the Sludge Volume Index (SVI), this reduction lying in the range between 15 % and 85 %.

Also, by means of using the mineral product for the purification of waters forming the object of the invention, an improvement is obtained in one or more of the purification parameters of the treated waste-water, said parameters being able to be any of those considered for evaluating the quality of the purification obtained, notably, though without being restricted to them, the following: pH, Chemical Oxygen Demand, Biological Oxygen Demand, Solids in Suspension, Total Solids in Suspension, Total Kjeldahl Nitrogen (TKN), ammoniacal nitrogen, nitrogen in the form of nitrates and/or nitrites, concentration of phosphorus, concentration of metallic elements, concentration of Oils and Fats, $V_{30}$, Conductivity, Turbidity, odour and colour.

## MODES OF EMBODIMENT OF THE INVENTION

The assessment of the usefulness of the mineral product forming the inventive object in purification by means of aerobic biological treatments of contaminated waste-water was carried out by means of a comparative analysis of the well known parameters in the industry which characterise the quality of waste-water:

- pH
- Chemical Oxygen Demand (COD; mg/l)
- Biological Oxygen Demand (BOD; mg/l)
- Total Kjeldahl Nitrogen (TKN; mg/l)
- Conductivity ($\mu$S/cm)
- Turbidity (NTU)
- Solids in Suspension (SS; mg/l)
- Oils and Fats (mg/l)
- $V_{30}$ (ml)

In addition, the main parameters characterising aerobic biological purification systems were considered:

- Solids in Suspension of the biological rector (SSLM; mg/l).
- Volatile Solids in Suspension of the biological rector (SSVLM; mg/l). This determines the concentration of microorganisms within the biological reactor.
- Mass load ($C_m$; kg COD/kg SSVLM x day). This states the relation existing between the feed to the biological reactor and the microorganisms existing in it and is defined by the following formula:

$$C_m = \frac{COD_e \times Q_e}{SSVLM \times V_r}$$

where $COD_e$ is the input COD to the reactor, $Q_e$ is the input flow and $V_r$ is the volume of the biological reactor.
- Sludge Volume Index (SVI; mg/l). This represents the volume occupied by one gram of biological sludge.

The present invention is illustrated by means of the following Example, which must not be considered as being at all limiting in its scope.

EXAMPLE

The example illustrates the use of the mineral product forming the inventive object in a process of aerobic biological purification of waste-water coming from the slaughterhouse industry.

A pilot test was conducted using SBR (Sequencing Batch Reactor) technology. This technology was chosen on the consideration that the results obtained in the pilot test can be more easily extrapolated to an industrial plant. Likewise, all the results obtained in this technology can be extrapolated later on to conventional treatments with clarification by settling (active sludges).

Two pilot reactors were prepared. The first of them (Reactor 1) was taken as the blank test or standard. The second (Reactor 2) was used for the daily adding of a composition in accordance with the invention. Each of them works with an aerated homogenisation pond with a hydraulic retention time of one day.

The waste-water being studied came from a slaughterhouse. Samples were taken in the plant three times a week. The COD values of the discharge displayed great variation owing to the different natures of the species killed in the slaughterhouse. Its value varied between 1800 and 10000 mg/l.

For the start-up of both reactors, they were inoculated with a biomass coming from an urban waste-water purification plant. This type of biomass was chosen on account of biological criteria and proximity. This sludge displayed SSLM and SSVLM values of 2400 mg/l and 2040 mg/l respectively. The starting mass load for both reactors was 0.25 kg COD/kg SSVLM.

After a month, the values of SSLM (3500 mg/l) and SSVLM (2800 mg/l) of both reactors showed that the urban biological sludge had become adapted to the discharge to treat. As of that moment, the addition was begun of a composition in accordance with the invention directly into reactor 2 with a dose of 2 g/l.

The analytical results of the discharge purified by both reactors did not show hardly any difference between them. The addition of the mineral product forming the inventive object did not influence the pH values (which remained in an optimum range of functioning) nor of conductivity. The elimination of COD with both reactors is of the order of 96 % with values that were very often less than 100 mg/l. Something similar can be said about the concentration of Oils and Fats or about the TKN value. Both reactors achieved purifications with effluents that more than complied with the most restrictive legislation in this regard.

The most significant difference between the two reactors came from the values of SSLM, SSVLM and $C_m$. Table 1 shows the ranges for these parameters in both reactors during the pilot test period.

TABLE 1

|  | Reactor 1 | Reactor 2 |
|---|---|---|
| SSLM; (mg/l). | 3500-5000 | 8000-10000 |
| SSVLM (mg/l) | 3000- 4500 | 5000-8000 |
| $C_m$(kg COD/kg SSVLM x day). | 0.20 | 0.11 |

The great difference in values of SSLM is marked by the inorganic nature of the mineral product forming the inventive object, which is added to Reactor 2 at a dose of 2 g/l. The comparison with SSVLM marks the difference between the concentrations of solids which really intervene in the purification process of the treated discharge. The concentration in Reactor 2, where the mineral product forming the inventive object is added, is 1.6 to 1.8 times greater than in Reactor 1.

As has been mentioned, Reactor 1 is capable of producing a perfect purification of the treated discharge, indicating that the value of $C_m$ of 0.20 kg COD/kg SSVLM x day is adequate. Logically, Reactor 2, where the addition takes place of the mineral product forming the inventive object, would be able to purify the treated waste if it were to operate with that same discharge value of $C_m$. Bearing in mind the definition of $C_m$ and considering the value of SSVLM in Reactor 2, it is confirmed that the addition forming the object of the invention to an aerobic biological reactor permits either greater contaminant loads to be purified adequately or the design of new reactors with a smaller volume. Specifically, if we were to design Reactor 2 so that it works with a mass load of 0.20 kg COD/kg SSVLM, then we obtain the fact that the volume of Reactor 2 would be 40 % less than the volume of Reactor 1.

This design would also be backed by the different behaviour observed in both reactors in the settling of the sludge produced, as shown in the SVI values of each of the reactors (table 2).

TABLE 2

|  | Reactor 1 | Reactor 2 |
| --- | --- | --- |
| SVI (mg/l) | 209 | 82 |

A reduction in the value of 60 % is observed. Moreover, this is obtained with an SSLM value of double for Reactor 2, in which the mineral product forming the inventive object is added.

The volume occupied by that sludge in Reactor 2 is approximately 40 % less than the sludge obtained in Reactor 1. The use of a mineral product in accordance with the invention permits a reactor to be designed with a smaller volume without a greater quantity of excess biological sludge thereby being produced, with the same purification capacity being maintained for the treated discharge.

**Claims**

1. A mineral product for the technological improvement of aerobic biological treatments **characterised in that** it comprises:

   - 45 to 95 % by weight of clay, and;
   - between 4 and 55 % by weight of mineral carbonates,
   and said mineral product has been modified by means of a treatment selected from between:
   - a heat treatment at a temperature between 20 and 1200° C, during a period of time between 10 seconds and 24 hours; and/or:
   - a treatment with a chemical product selected from among an inorganic acid, an organic acid, one or more salts of inorganic acids and one or salts of organic acids.

2. A mineral product according to claim 1, **characterised in that** said clays are sepiolite and/or paligorskite.

3. A mineral product according to one of claims 1 or 2, **characterised in that** said clays are selected from the group formed from sepiolite, paligorskite, smectites, illite and mixtures thereof.

4. A mineral product according to claim 3, **characterised in that** said clays are present in the following percentages:

|  | % (w/w) |
| --- | --- |
| - sepiolite and/or paligorskite: | 5-80 |
| - smectites: | 5-40 |
| - illite: | 0-30 |

with respect to the total weight of the composition.

5. A mineral product according to claim 1, **characterised in that** said smectites are selected from among the group formed from: montmorillonite, beidellite, hectorite, nontronite, saponite, sauconite, stevensite, and mixtures thereof.

6. A mineral product according to one of claims 1 to 5, **characterised in that** said mineral carbonates are selected from among the group formed from $CaCO_3$, $MgCO_3$, $CaMg(CO_3)_2$, $FeCO_3$, and mixtures thereof.

7. A mineral product according to any of the above claims, **characterised in that** it additionally includes up to 20 % by weight of minerals selected from the grouped formed from feldspars, plagioclases, micas, quartz, kaolinite, talc, chlorite, vermiculite, hallyosite and mixtures thereof, at all times with respect to the total weight of the composition.

8. A mineral product according to any of the above claims, **characterised in that** it is presented as a porous granular product with a grain size of less than 5 mm, preferably less than 0.6 mm, preferably less than 150 $\mu$m and preferably less than 10 $\mu$m.

9. Use of a mineral product defined in any of claims 1 to 8 in purification treatments of waste-water by means of biological treatments, whether aerobic or anaerobic.

10. Use according to claim 9, **characterised in that** the treatment is carried out by means of fixed bed aerobic biological treatment systems.

11. Use according to claim 9, **characterised in that** the treatment is carried out by means of moving bed aerobic biological treatment systems.

12. Use according to claim 9, **characterised in that** the treatment is carried out by means of a system corresponding to active sludge technology.

13. Use according to claim 9, **characterised in that** said system corresponds to SBR (Sequencing Batch Reactor) technology.

14. Use according to one of claims 9 to 13, **characterised in that** corrector agents for pH, flocculants, coagulants, decolorants and mixtures thereof are additionally used.

15. Use according to one of claims 9 to 14, **characterised in that** quantity of mineral product lies between 0.001 % and 50 % in dry matter with respect to one litre of waste-water to treat.

16. Use according to one of claims 9 to 15, **characterised in that** the mineral is added in solid form.

17. Use according to one of claims 9 to 16, **characterised in that** the mineral is added in the form of a liquid suspension.

18. Use according to any of claims 9 to 17, **characterised in that** a reduction is obtained in the value of the Sludge Volume Index (SVI), lying in the range between 15 % and 85 %.

19. Use according to any of claims 9 to 17, **characterised in that** an improvement is obtained in one or more of the purification parameters of the treated waste-water, said parameters being able to be any of those considered for evaluating the quality of the purification obtained, notably, though without being restricted to them, the following: pH, Chemical Oxygen Demand, Biological Oxygen Demand, Solids in Suspension, Total Solids in Suspension, Total Kjeldahl Nitrogen (TKN), ammoniacal nitrogen, nitrogen in the form of nitrates and/or nitrites, concentration of phosphorus, concentration of metallic elements, concentration of Oils and Fats, $V_{30}$, Conductivity, Turbidity, odour and colour.

European Patent
Office

**EUROPEAN SEARCH REPORT**

Application Number

EP 06 38 0196

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 533 275 A (MINERA CATALANO ARAGONESA SA [ES]) 25 May 2005 (2005-05-25)<br>* example 5 *<br>* claims 1-26 *<br>* paragraph [0028] - paragraph [0038] *<br>----- | 1-19 | INV.<br>C02F1/28<br>C02F1/52<br>C02F3/12 |
| A | EP 0 834 473 A (EPARCO SA [FR]) 8 April 1998 (1998-04-08)<br>* the whole document *<br>----- | 1-19 | |
| A | DE 37 28 812 A1 (MARX GUENTHER [DE]) 20 October 1988 (1988-10-20)<br>* the whole document *<br>----- | 1-19 | |
| A | A. MUKHOPADHYAY, E. AL-AWADI, R. OSKUI, K. HADI, F. AL-RUWAIH, M. TURNER, A. AKBER: "Laboratory investigations of compatibility of the Kuwait Group aquifer, Kuwait, with possible injection waters" JOURNAL OF HYDROLOGY, vol. 285, no. 1-4, 2004, pages 158-176, XP002404028<br>* the whole document *<br>----- | 1-19 | |

TECHNICAL FIELDS
SEARCHED     (IPC)

C02F

The present search report has been drawn up for all claims

| Place of search | Date of completion of the search | Examiner |
|---|---|---|
| The Hague | 27 October 2006 | Janssens, Christophe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.....................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 06 38 0196

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2006

| Patent document cited in search report | | Publication date | Patent family member(s) | | Publication date |
|---|---|---|---|---|---|
| EP 1533275 | A | 25-05-2005 | NONE | | |
| EP 0834473 | A | 08-04-1998 | CA | 2216660 A1 | 02-04-1998 |
| | | | CN | 1182719 A | 27-05-1998 |
| | | | FR | 2753988 A1 | 03-04-1998 |
| | | | JP | 10180273 A | 07-07-1998 |
| | | | RU | 2201406 C2 | 27-03-2003 |
| DE 3728812 | A1 | 20-10-1988 | WO | 8807891 A1 | 20-10-1988 |
| | | | EP | 0328560 A1 | 23-08-1989 |

EPO FORM P0459

For more details about this annex : see Official Journal of the European Patent Office, No. 12/82

**REFERENCES CITED IN THE DESCRIPTION**

**Patent documents cited in the description**

- US 3935067 A
- FR 2551048 A1
- ES 2005754
- WO 9420425 A
- ES 5643453
- EP 0834473 A1
- US 6503740 B
- DE 3440619
- DE 3501563
- ES 2087833
- JP 2004167471 B